# EUROPEAN PATENT SPECIFICATION

(11) **EP 3 242 418 B1**
(45) Date of publication and mention of the grant of the patent: **20.02.2019**
(21) Application number: 14909395.7
(22) Date of filing: 30.12.2014
(51) Int. Cl.: H04B 10/40, H04B 10/2575

(54) **WIRELESS FRONTHAUL PASSIVE OPTICAL NETWORK (PON) SYSTEM, OPTICAL NETWORK DEVICE AND METHOD**
DRAHTLOSES FRONTHAUL-PON-SYSTEM, OPTISCHE NETZWERKVORRICHTUNG UND VERFAHREN
SYSTÈME DE RÉSEAU OPTIQUE PASSIF (PON) DE FRONTHAUL SANS FIL, DISPOSITIF DE RÉSEAU OPTIQUE ET PROCÉDÉ

(43) Date of publication of application: 08.11.2017
(73) Proprietor: Huawei Technologies Co. Ltd., Shenzhen, Guangdong 518129 (CN)
(72) Inventor: ZHOU, Lei, Shenzhen Guangdong 518129 (CN); LIN, Huafeng, Shenzhen Guangdong 518129 (CN); LIU, Xiang, Shenzhen Guangdong 518129 (CN)
(74) Representative: Pfenning, Meinig & Partner mbB
(86) International application number: PCT/CN2014/095631
(87) International publication number: WO 2016/106584

(56) References cited:
- WO-A1-2014/061552
- WO-A1-2014/075725
- CN-A- 101 964 926
- CN-A- 102 511 137
- CN-A- 103 109 476
- JP-A- 2014 110 574

## Description

### TECHNICAL FIELD

Embodiments of the present application relate to the field of communications technologies, and in particular, to a wireless fronthaul passive optical network PON method and system, and an optical network device.

### BACKGROUND

A passive optical network (Passive Optical Network, PON) has become a mainstream technology in the broadband access field. With rapid development of various broadband services, including video conference, 3D TV, mobile backhaul, and interactive game, an increasingly high requirement is imposed on access bandwidth. To adapt to broadband evolution in the future, a passive optical network featuring higher bandwidth, a long distance, and a big branch is required.

At present, a base station in a wireless network backhauls a signal by using a backhaul link (backhaul link). Baseband unit (Baseband Unit, BBU) devices are disposed in a centralized manner, radio remote units (Radio Remote Unit, RRU) are located in a far-end base station, and transmission between an RRU and a BBU is performed by using a common public radio interface (Common Public Radio Interface, CPRI) standard.

However, quite large fronthaul bandwidth is required for transmission between an RRU and a BBU through a CPRI interface. As a result, low transmission efficiency is caused.

WO 2014/075725 proposes a mechanism for monitoring optical fibers in an optical backhaul network that connects nodes of a distributed radio base station system. The nodes carry data streams using the Common Public Radio Interface (CPRI)protocol. The method includes: receiving from at least one node a CPRI alarm indicative of a transmission failure in a CPRI data stream,and triggering fault analysis of an optical fiber identified as carrying the CPRI data stream. Using CPRI alarms that are generated by transmission failures between nodes as a trigger for monitoring the physical fiber carrying the CPRI streams provides a targeted mechanism for determining fiber failures, which had a low response time and thus enables rapid repair of any fault and minimal disruption to the network.

US 2015/0229397 A1 describes that since a sampling frequency of RRU is always constant, A/D conversion may be performed with a sampling frequency higher than necessary with respect to a frequency band width of a radio signal. A sampling frequency change function, and the sampling frequency is reduced in a range where an aliasing component does not deteriorate signal quality of a desired signal component when the sampling frequency is decreased, based on radio band allocation information, or signal transmission between BBU and RRU is stopped in a no signal section, whereby a band required for digital RoF transmission between the BBU and the RRU is reduced

### SUMMARY

Embodiments of the present application provide a wireless fronthaul passive optical network PON method and system, and an optical network device, to reduce fronthaul bandwidth required for transmission between an RRU and a BBU through a CPRI interface, and improve transmission efficiency.

According to a first aspect, an embodiment of the present application provides an optical line terminal, including:
a common public radio interface CPRI interface, configured to receive first data from a baseband unit BBU;
a wireless compatibility module, configured to sequentially perform operations of decoding and CPRI control word extraction on the first data, to obtain second data and a CPRI control word;
a data compression module, configured to perform data compression processing on the second data, to obtain third data;
a framing module, configured to form a control frame by using the CPRI control word and an access network control word;
a frequency aggregation module, configured to perform frequency aggregation processing on the third data and the control frame;
a digital-to-analog conversion module, configured to perform digital-to-analog conversion on data obtained by means of frequency aggregation processing, to obtain an analog signal; and
an optical transmitter, configured to modulate the analog signal into an optical signal, and send the optical signal to an optical distribution network ODN.

With reference to the first aspect, in a first implementation of the first aspect, the wireless compatibility module specifically includes:
a decoding unit, configured to decode the first data;
a serial-to-parallel conversion unit, configured to perform serial-to-parallel conversion on the decoded first data, to obtain two pieces of mutually orthogonal data; and
a CPRI deframing unit, configured to separately perform CPRI control word extraction on the two pieces of mutually orthogonal data, to obtain the CPRI control word and the second data that includes the two pieces of orthogonal data.

With reference to the first aspect or the first implementation, in a second implementation of the first aspect, the optical line terminal further includes:
a forward error correction FEC module, configured to perform FEC encoding on the control frame.

With reference to the second implementation, in a third implementation of the first aspect, the optical line terminal further includes:
a higher-order modulation module, configured to perform higher-order modulation on a control frame obtained by means of FEC encoding; and
a TS processing module, configured to add a training sequence to a control frame obtained by means of higher-order modulation, and input the control frame to the aggregation module.

With reference to the first aspect, the first implementation, the second implementation, or the third implementation, in a fourth implementation of the first aspect, the data compression module is specifically configured to perform constellation reconstruction on the second data, to obtain the third data.

With reference to the first aspect, the first implementation, the second implementation, the third implementation, or the fourth implementation, in a fifth implementation of the first aspect, the aggregation module includes:
a fast Fourier transformation FFT unit, configured to separately perform FFT transformation on the third data and the control frame;
an inverse fast Fourier transformation IFFT unit, configured to perform IFFT transformation on third data and a control frame that are obtained by means of FFT transformation; and
a parallel-to-serial conversion unit, configured to perform parallel-to-serial conversion on third data and a control frame that are obtained by means of IFFT transformation, and send converted-to data to the ODN.

According to a second aspect, an embodiment of the present application further provides an optical network unit, including:
an optical receiver, configured to receive an optical signal sent by an optical distribution network ODN, and convert the optical signal into an analog signal;
an analog-to-digital conversion module, configured to convert the analog signal into a digital signal;
a frequency disaggregation module, configured to perform frequency disaggregation processing on the digital signal, to obtain third data and a control frame;
a bit reassembly module, configured to decompress the third data to obtain second data;
a deframing module, configured to extract an access network control word from the control frame, to obtain a common public radio interface CPRI control word;
a wireless compatibility module, configured to sequentially perform operations of CPRI frame restoration and encoding on the CPRI control word and the second data, to obtain first data; and
a CPRI interface, configured to send the first data to a radio remote unit RRU.

With reference to the second aspect, in a first implementation of the second aspect, the optical network unit further includes:
a channel compensation module, configured to perform channel compensation processing and forward error correction FEC encoding processing on the control frame, to obtain bit error rate BER information of a channel.

With reference to the second aspect or the first implementation, in a second implementation of the second aspect, the wireless compatibility module is specifically configured to scramble code according to a value relationship between a BER and a threshold.

With reference to the second implementation, in a third implementation of the second aspect, the wireless compatibility module is specifically configured to: if a sum of values of original code bits is greater than a set threshold n, add 1 behind the n^{th} bit and add 1 behind the last bit; or if a sum of values of original code bits is less than a set threshold n, add 0 behind the n^{th} bit and add 0 behind the last bit, where n is a positive integer greater than 1.

With reference to the second aspect, the first implementation, the second implementation, or the third implementation, in a fourth implementation of the second aspect, the wireless compatibility module includes:
a CPRI frame restoration unit, configured to perform CPRI frame restoration on the CPRI control word and the second data; and
an encoding unit, configured to encode data obtained by means of CPRI frame restoration to obtain the first data, and send the first data to the RRU.

With reference to the second aspect, the first implementation, the second implementation, the third implementation, or the fourth implementation, in a fifth implementation of the second aspect, the frequency disaggregation module includes:
a serial-to-parallel conversion unit, configured to perform serial-to-parallel conversion on the digital signal;
a fast Fourier transformation FFT unit, configured to perform FFT transformation on a digital signal obtained by means of serial-to-parallel conversion; and
an inverse fast Fourier transformation IFFT unit, configured to perform IFFT transformation on a digital signal obtained by means of FFT transformation, to obtain the third data and the control frame.

According to a third aspect, an embodiment of the present application further provides a wireless fronthaul passive optical network PON system, including a baseband unit BBU, the optical line terminal OLT according to the first aspect, an optical distribution network ODN, the optical network unit ONU according to the second aspect, and a radio remote unit RRU, where
the BBU communicates with the OLT through a common public radio interface CPRI on the BBU, and the RRU communicates with the ONU through a CPRI interface on the RRU.

According to a fourth aspect, an embodiment of the present application further provides a wireless fronthaul passive optical network PON method, including:
receiving first data from a baseband unit BBU;
sequentially performing operations of decoding and CPRI control word extraction on the first data, to obtain second data and a CPRI control word;
performing data compression processing on the second data, to obtain third data, and forming a control frame by using the CPRI control word and an access network control word;
performing frequency aggregation processing on the third data and the control frame;
performing digital-to-analog conversion on data obtained by means of frequency aggregation processing, to obtain an analog signal; and
modulating the analog signal into an optical signal, and sending the optical signal to an optical distribution network ODN.

With reference to the fourth aspect, in a first implementation of the fourth aspect, the sequentially performing operations of decoding and CPRI control word extraction on the first data, to obtain second data and a CPRI control word specifically includes:
decoding the first data;
performing serial-to-parallel conversion on the decoded first data, to obtain two pieces of mutually orthogonal data; and
separately performing CPRI control word extraction on the two pieces of mutually orthogonal data, to obtain the CPRI control word and the second data that includes the two pieces of orthogonal data.

With reference to the fourth aspect or a first implementation of the fourth aspect, in a second implementation of the fourth aspect, after the forming a control frame by using the CPRI control word and an access network control word, the method further includes:
performing FEC encoding on the control frame.

With reference to the second implementation, in a third implementation of the fourth aspect, after the performing FEC encoding on the control frame, the method further includes: performing higher-order modulation on a control frame obtained by means of FEC encoding; and adding a training sequence to a control frame obtained by means of higher-order modulation, and performing frequency aggregation processing.

With reference to the fourth aspect, the first implementation, the second implementation, or the third implementation, in a fourth implementation of the fourth aspect, the performing data compression processing on the second data, to obtain third data specifically includes:
performing constellation reconstruction on the second data, to obtain the third data.

With reference to the fourth aspect, the first implementation, the second implementation, the third implementation, or the fourth implementation, in a fifth implementation of the fourth aspect, the performing frequency aggregation processing on the third data and the control frame specifically includes:
separately performing FFT transformation on the third data and the control frame;
performing IFFT transformation on third data and a control frame that are obtained by means of FFT transformation; and
performing parallel-to-serial conversion on third data and a control frame that are obtained by means of IFFT transformation, and sending converted-to data to the ODN.

According to a fifth aspect, an embodiment of the present application further provides a wireless fronthaul passive optical network PON method, including:
receiving an optical signal sent by an optical distribution network ODN, and converting the optical signal into an analog signal;
converting the analog signal into a digital signal;
performing frequency disaggregation processing on the digital signal, to obtain third data and a control frame;
decompressing the third data to obtain second data;
extracting an access network control word from the control frame, to obtain a common public radio interface CPRI control word;
sequentially performing operations of CPRI frame restoration and encoding on the CPRI control word and the second data, to obtain first data; and
sending the first data to a radio remote unit RRU.

With reference to the fifth aspect, in a first implementation of the fifth aspect, after the performing frequency disaggregation processing on the digital signal, to obtain third data and a control frame, the method further includes:
performing channel compensation processing and forward error correction FEC encoding processing on the control frame, to obtain bit error rate BER information of a channel.

With reference to the fifth aspect or the first implementation, in a second implementation of the fifth aspect, the performing an encoding operation on the CPRI control word and the second data specifically includes:
scrambling code according to a value relationship between a BER and a threshold.

With reference to the second implementation, in a third implementation of the fifth aspect, the scrambling code according to a value relationship between a BER and a threshold specifically includes:
if a sum of values of original code bits is greater than a set threshold n, adding 1 behind the n^{th} bit and adding 1 behind the last bit; or if a sum of values of original code bits is less than a set threshold n, adding 0 behind the n^{th} bit and adding 0 behind the last bit, where n is a positive integer greater than 1.

With reference to the fifth aspect, the first implementation, the second implementation, or the third implementation, in a fourth implementation of the fifth aspect, the sequentially performing operations of CPRI frame restoration and encoding on the CPRI control word and the second data, to obtain first data specifically includes:
performing CPRI frame restoration on the CPRI control word and the second data; and
encoding data obtained by means of CPRI frame restoration to obtain the first data, and sending the first data to the RRU.

With reference to the fifth aspect, the first implementation, the second implementation, the third implementation, or the fourth implementation, in a fifth implementation of the fifth aspect, the performing frequency disaggregation processing on the digital signal, to obtain third data and a control frame specifically includes:
performing serial-to-parallel conversion on the digital signal;
performing FFT transformation on a digital signal obtained by means of serial-to-parallel conversion; and
performing IFFT transformation on a digital signal obtained by means of FFT transformation, to obtain the third data and the control frame.

According to the wireless fronthaul passive optical network PON method and system, and the optical network device that are provided in the embodiments of the present application, an OLT performs wireless compatibility processing on data received through a CPRI interface of a BBU to divide the data into a data part and a control word part, and may separately process the two parts, so that the data part can be compressed as much as possible to reduce fronthaul bandwidth, and transmission efficiency is improved.

### BRIEF DESCRIPTION OF DRAWINGS

To describe the technical solutions in the embodiments of the present application or in the prior art more clearly, the following briefly describes the accompanying drawings required for describing the embodiments or the prior art. Apparently, the accompanying drawings in the following description show merely some embodiments of the present application, and a person of ordinary skill in the art may still derive other drawings from these accompanying drawings without creative efforts.
FIG. 1 is a schematic structural diagram of an embodiment of a wireless fronthaul passive optical network PON system according to the present application;
FIG. 2 is a schematic structural diagram of an embodiment of an optical line terminal OLT according to the present application;
FIG. 3 is a schematic structural diagram of another embodiment of an optical line terminal OLT according to the present application;
FIG. 4 is a schematic structural diagram of an embodiment of an optical network unit ONU according to the present application;
FIG. 5 is a schematic structural diagram of another embodiment of an optical network unit ONU according to the present application;
FIG. 6 is a schematic diagram of 8B/10B encoding according to the present application;
FIG. 7 is a flowchart of an embodiment of a wireless fronthaul passive optical network PON method according to the present application; and
FIG. 8 is a flowchart of another embodiment of a wireless fronthaul passive optical network PON method according to the present application.

### DESCRIPTION OF EMBODIMENTS

The following clearly and completely describes the technical solutions in the embodiments of the present application with reference to the accompanying drawings in the embodiments of the present application. Apparently, the described embodiments are merely some but not all of the embodiments of the present application. All other embodiments obtained by a person of ordinary skill in the art based on the embodiments of the present application without creative efforts shall fall within the protection scope of the present application.

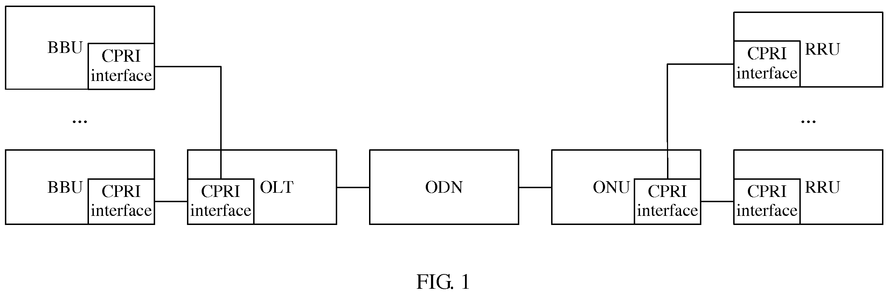

FIG. 1 is a schematic structural diagram of an embodiment of a wireless fronthaul passive optical network PON system according to the present application. As shown in FIG. 1, the wireless fronthaul PON system includes: a BBU, an optical line terminal (Optical Line Terminal, OLT), an optical distribution network (Optical Distribution Network, ODN), an optical network unit (Optical network unit, ONU), and a radio remote unit RRU.

The BBU communicates with the OLT through a CPRI on the BBU. The RRU communicates with the ONU through a CPRI interface on the RRU.

In the present application, an existing OLT device is improved, and correspondingly, an existing ONU device is improved, to reduce fronthaul bandwidth and improve transmission efficiency. Specific improvement content thereof is described in detail in the following device and method embodiments. It should be noted that in the present application, each OLT can support a large quantity of BBUs, that is, each OLT can simultaneously communicate with multiple BBUs. Likewise, each ONU can support a large quantity of RRUs, that is, each ONU can simultaneously communicate with multiple RRUs.

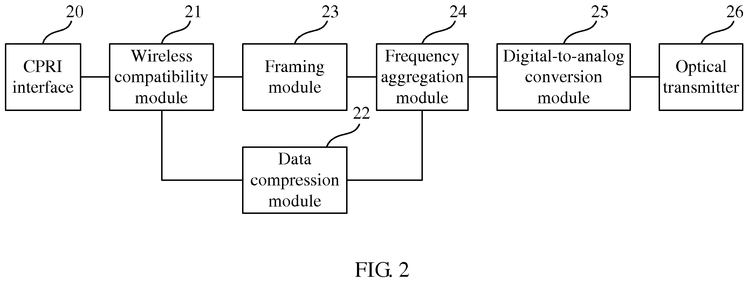

FIG. 2 is a schematic structural diagram of an embodiment of an optical line terminal OLT according to the present application. As shown in FIG. 2, the OLT includes:
a CPRI interface 20, configured to receive first data from a baseband unit BBU;
a wireless compatibility module 21, configured to sequentially perform operations of decoding and common public radio interface CPRI control word extraction on the first data, to obtain second data and a CPRI control word;
a data compression module 22, configured to perform data compression processing on the second data, to obtain third data;
a framing module 23, configured to form a new control frame by using the CPRI control word and an access network control word;
a frequency aggregation module 24, configured to perform frequency aggregation processing on the third data and the control frame;
a digital-to-analog conversion module 25, configured to perform digital-to-analog conversion on data obtained by means of frequency aggregation processing, to obtain an analog signal; and
an optical transmitter 26, configured to modulate the analog signal into an optical signal, and send the optical signal to an optical distribution network ODN.

It should be noted that BBUs in the present application may be disposed in a centralized manner, and An RRU may be disposed in a far-end base station.

It should be noted that a BBU sends, to user equipment (User Equipment, UE), I/Q data, that is, two pieces of mutually orthogonal data. The I data and the Q data each have 15 bits, and the BBU adds a 1-bit CPRI protocol control word to both the I data and the Q data, so that the I data and the Q data each have 16 bits, and there are 32 bits in total. The BBU performs parallel-to-serial conversion on the two pieces of data to obtain 32-bit serial data, and the data is sent to the OLT through a CPRI interface of the BBU.

The OLT is a device in a wired access network and an access network device cannot be managed by using a CPRI control word. Therefore, wireless compatibility processing needs to be performed by the wireless compatibility module 21 on the first data received through the CPRI interface 20. Wireless compatibility processing mainly includes decoding processing corresponding to encoding on the BBU, and CPRI control word extraction processing.

CPRI control word extraction processing is intended to divide the first data into a data part and a control word part and separately process the data part and the control word part subsequently. The obtained data part, that is, the second data, undergoes compressing processing performed by the data compression module 22, to reduce fronthaul bandwidth to a greatest extent. An access network control word, for example: a PON management control word needs to be further added to the extracted control word part. To ensure that all control words are correct in a transmission process, further, special protection processing (for example, FEC) may be further performed on all the control words, to obtain the control frame.

After being separately processed, the data part and control word part are combined into one piece of data by means of frequency aggregation by the frequency aggregation module 24; and the data is sent to the ODN after undergoing digital-to-analog conversion and modulation, and then is sent to an ONU by the ODN.

The optical line terminal OLT provided in this embodiment of the present application performs wireless compatibility processing on data received through a CPRI interface of a BBU to divide the data into a data part and a control word part, and may separately process the two parts, so that the data part can be compressed as much as possible, to reduce fronthaul bandwidth and improve transmission efficiency.

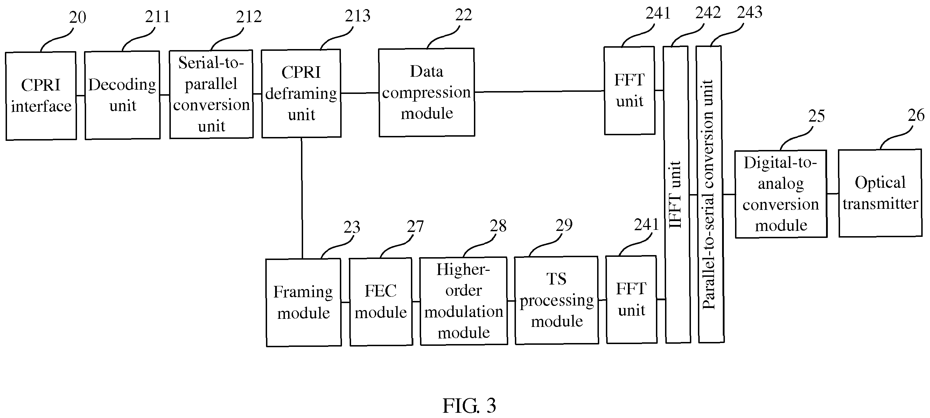

FIG. 3 is a schematic structural diagram of another embodiment of an optical line terminal OLT according to the present application. As shown in FIG. 3, on a basis of the embodiment shown in FIG. 2:

In an example of an implementation the data compression module is specifically configured to: perform constellation reconstruction on second data to restore original baseband analog information of a radio signal (For example, an original LTE signal has bandwidth of 20 MHz, and a data rate is 1.228 Gb/s; after being processed by the data compression module, a high-speed signal is restored to an analog signal occupying only bandwidth of 20 MHz and requiring a data rate of 30 Mbit/s, so that the obtained signal has up to 40 times the compression efficiency of the original signal), to obtain third data. Fronthaul bandwidth can be reduced to a greatest extent in this data compression manner.

Further, to avoid an error of a CPRI control word in a transmission process, the device may further include: a forward error correction FEC module 27, configured to perform FEC encoding on a control frame; a higher-order modulation module 28, configured to perform higher-order modulation on a control frame obtained by means of FEC encoding; and a TS processing module 29, configured to add a training sequence to a control frame obtained by means of higher-order modulation, and input the control frame to the frequency aggregation module 24.

In addition, on a basis of the embodiment shown in FIG. 2, this embodiment further provides an exemplary implementation of the wireless compatibility module 21, which may include:
a decoding unit 211, configured to decode first data;
a serial-to-parallel conversion unit 212, configured to perform serial-to-parallel conversion on the decoded first data, to obtain two pieces of mutually orthogonal data; and
a CPRI deframing unit 213, configured to separately perform CPRI control word extraction on the two pieces of mutually orthogonal data, to obtain a CPRI control word and second data that includes the two pieces of orthogonal data.

Still further, on a basis of the embodiment shown in FIG. 2, this embodiment further provides an exemplary implementation of the frequency aggregation module 24, which may include:
a fast Fourier transformation FFT unit 241, configured to separately perform FFT transformation on the third data and the control frame, where multiple FFT units 241 may be included to perform FFT transformation on multiple pieces of third data and multiple control frames;
an inverse fast Fourier transformation IFFT unit 242, configured to perform IFFT transformation on third data and a control frame that are obtained by means of FFT transformation; and
a parallel-to-serial conversion unit 243, configured to perform parallel-to-serial conversion on third data and a control frame that are obtained by means of IFFT transformation, and send converted-to data to the ODN.

For example, a BBU device outputs a Long Term Evolution (Long Term Evolution, LTE) signal with bandwidth of 20 MHz. An I signal and a Q signal on the BBU each have 15 bits and have a rate of 30.72 Mb/s. A 1-bit CPRI control word is added to both the I signal and the Q signal, and there are 32 bits in total. After serial-to-parallel conversion is performed, a rate is also increased correspondingly by 32 times and becomes 30.72 x 32 = 983.4 Mb/s. This data stream is then encoded, for example, by means of 8B/10B encoding, to obtain data output at a standard CPRI rate of 1.228 Gb/s.

On the OLT, the decoding unit 211 first performs corresponding decoding, for example, 8B/10B decoding, to obtain a data stream of 983.4 Mb/s. The serial-to-parallel conversion unit 212 performs serial-to-parallel conversion to restore the 16-bit I signal and the 16-bit Q signal. Then, the CPRI deframing unit 213 extracts the control word. Bandwidth of the second data is compressed by 15 times after constellation reconstruction is performed on the second data, to obtain the original signal of 30.72 MS/s, and the signal enters the frequency aggregation module. Bandwidth of a signal that is outputted after having undergone processing by the frequency aggregation module 24 is 20 MHz, and is significantly reduced compared with existing 1.228 G bandwidth, so that the obtained signal has up to 40 times the compression efficiency of the original signal.

It should be noted that the foregoing describes that a 1.228 Gb/s LTE signal undergoes conversion and is compressed to a signal with bandwidth of 20 MHz. It may be understood that the OLT can also process N signals (N is a positive integer greater than 1) simultaneously, and total bandwidth finally output by the frequency aggregation module is 20 MHz x N, to ensure that required bandwidth always has same bandwidth compression efficiency. Bandwidth compression also reduces a quantity of required optical fibers.

The optical line terminal OLT provided in this embodiment of the present application performs wireless compatibility processing on data received through a CPRI interface of a BBU to divide the data into a data part and a control word part, and may separately process the two parts. To avoid a transmission error in the control word part, error correction processing may be performed on the control word part. Constellation reconstruction may be performed on the data part for data compression, so as to compress the data part as much as possible to reduce fronthaul bandwidth. This improves transmission efficiency, reduces bandwidth of a required optoelectronic device and a quantity of required fronthaul optical fibers, and significantly decreases network investment and operation and maintenance costs.

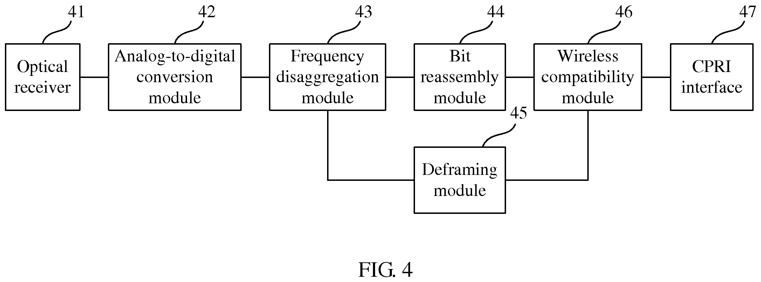

FIG. 4 is a schematic structural diagram of an embodiment of an optical network unit ONU according to the present application. As shown in FIG. 4, the ONU includes:
an optical receiver 41, configured to receive an optical signal sent by an optical distribution network ODN, and convert the optical signal into an analog signal;
an analog-to-digital conversion module 42, configured to convert the analog signal into a digital signal;
a frequency disaggregation module 43, configured to perform frequency disaggregation processing on the digital signal, to obtain third data and a control frame;
a bit reassembly module 44, configured to decompress the third data to obtain second data;
a deframing module 45, configured to extract an access network control word from the control frame, to obtain a CPRI control word;
a wireless compatibility module 46, configured to sequentially perform operations of CPRI frame restoration and encoding on the CPRI control word and the second data, to obtain first data; and
a CPRI interface 47, configured to send the first data to a radio remote unit RRU.

It should be noted that an optical signal sent by an OLT is sent to the ONU by using the ODN, and a processing process of the ONU is basically reverse processing operations of the OLT.

Specifically, a data part and a control word part are separately processed by the OLT device and then combined into one piece of data. Therefore, correspondingly, in the ONU, the third data and the control frame are obtained by means of frequency disaggregation processing by the frequency disaggregation module 43.

The OLT device performs compression processing on the second data, to reduce fronthaul bandwidth. Correspondingly, the ONU needs to perform decompression and restoration on the data part, and the bit reassembly module 44 performs decompression processing to obtain the second data. In the OLT device, an access network control word is added to a CPRI control word. Correspondingly, the deframing module 45 in the ONU extracts the access network control word from the control frame, to obtain the CPRI control word.

Finally, after the wireless compatibility module 46 sequentially performs operations of CPRI frame restoration and encoding on the CPRI control word and the second data to obtain the original first data, the CPRI interface 47 sends the first data to a CPRI interface of the RRU.

The RRU device performs encoding operations reverse to those of a BBU, such as 8B/10B decoding, a serial-to-parallel conversion operation, intermediate frequency (IF) processing, digital-to-analog conversion, and another process, and then sends data to UE by using an antenna.

According to the optical network unit ONU provided in this embodiment of the present application, an OLT performs wireless compatibility processing on data received through a CPRI interface of a BBU to divide the data into a data part and a control word part, and may separately process the two parts, so that the data part can be compressed as much as possible to reduce fronthaul bandwidth. The ONU executes processing operations reverse to those of the OLT device, so as to improve transmission efficiency.

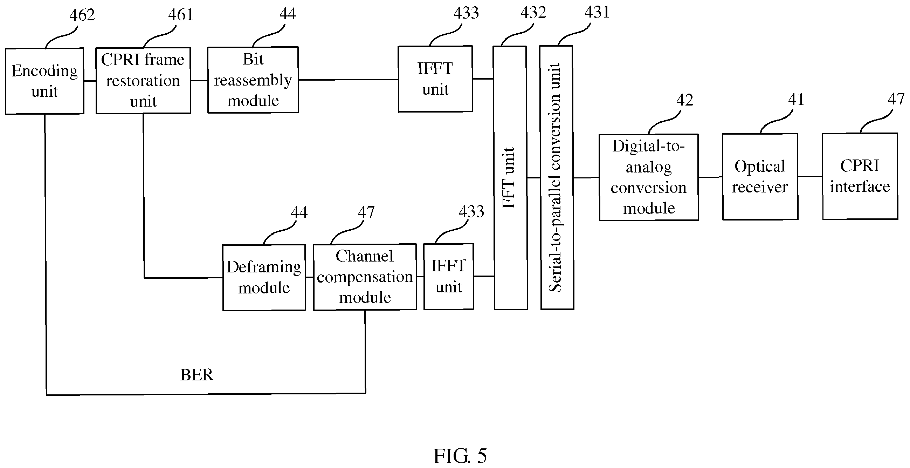

FIG. 5 is a schematic structural diagram of another embodiment of an optical network unit ONU according to the present application. As shown in FIG. 5, on a basis of the embodiment shown in FIG. 4:

A CPRI frame sent by an original BBU device is obtained after CPRI frame reassembly is performed. In order to interface with a CPRI interface of an existing RRU device, 8B/10B encoding needs to be further performed in this case. If only conventional 8B/10B encoding is performed, the RRU device never detects an 8B/10B decoding error when receiving information. However, an actual case is different. Therefore, an innovative BER-based 8B/10B encoding module is introduced herein.

Specifically, to reduce a bit error rate in a transmission process, a channel compensation module 47 may be further included and is configured to perform channel compensation processing and forward error correction FEC encoding processing on a control frame, to obtain bit error rate BER information of a channel.

Correspondingly, the wireless compatibility module 46 is specifically configured to scramble code according to a value relationship between a BER and a threshold.

Specifically, an appropriate BER threshold BERth may be set based on the BER. When BER < BERth, normal 8B/10B encoding may be used; when BER ≥ BERth, scrambled 8B/10B encoding may be used.

Therefore, the wireless compatibility module 46 may be specifically configured to: if a sum of values of original code bits is greater than a set threshold n, add 1 behind the n^{th} bit and add 1 behind the last bit; or if a sum of values of original code bits is less than a set threshold n, add 0 behind the n^{th} bit and add 0 behind the last bit. For 8B/10B encoding, generally, n may be 4.

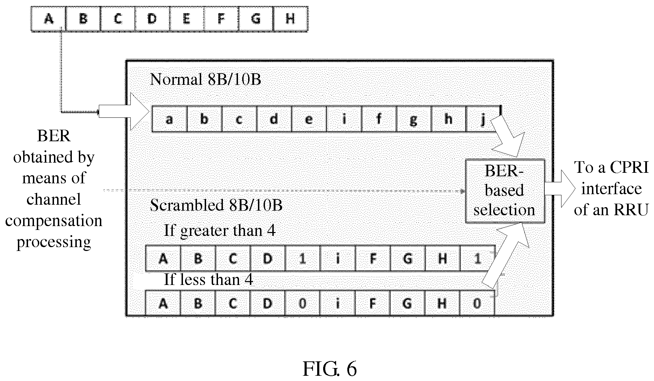

8B/10B encoding is used as an example for description. Referring to FIG. 6, when a sum of original 8 bits is greater than 4, output of scrambled 8B/10B encoding is as follows: 1 is added behind the fourth bit of the original 8 bits, and 1 is added behind the last bit of the original 8 bits. Alternatively, when a sum of original 8 bits is less than 4, output of scrambled 8B/10B encoding is as follows: 0 is added behind the fourth bit of the original 8 bits, and 0 is added behind the last bit of the original 8 bits.

Further, on a basis of the embodiment shown in FIG. 4, this embodiment further provides a specific implementation of the wireless compatibility module 46. The wireless compatibility module 46 may include:
a CPRI frame restoration unit 461, configured to perform CPRI frame restoration on a CPRI control word and second data; and
an encoding unit 462, configured to encode data obtained by means of CPRI frame restoration, and send obtained first data to the RRU.

Further, on a basis of the embodiment shown in FIG. 4, this embodiment further provides a specific implementation of the frequency disaggregation module 43. The frequency disaggregation module 43 may include:
a serial-to-parallel conversion unit 431, configured to perform serial-to-parallel conversion on a digital signal;
a fast Fourier transformation FFT unit 432, configured to perform FFT transformation on a digital signal obtained by means of serial-to-parallel conversion; and
an inverse fast Fourier transformation IFFT unit 433, configured to perform IFFT transformation on a digital signal obtained by means of FFT transformation, to obtain third data and a control frame.

According to the optical network unit ONU provided in this embodiment of the present application, an OLT performs wireless compatibility processing on data received through a CPRI interface of a BBU to divide the data into a data part and a control word part, and may separately process the two parts, so that the data part can be compressed as much as possible to reduce fronthaul bandwidth. The ONU executes processing operations reverse to those of the OLT device, so as to improve transmission efficiency. In addition, the ONU provided in this embodiment may generate a BER in a manner of channel compensation, so as to scramble code according to a value relationship between the BER and a threshold. This ensures that an RRU can recognize error information and start a corresponding error handling procedure in a case in which an error occurs in data information or a CPRI control word.

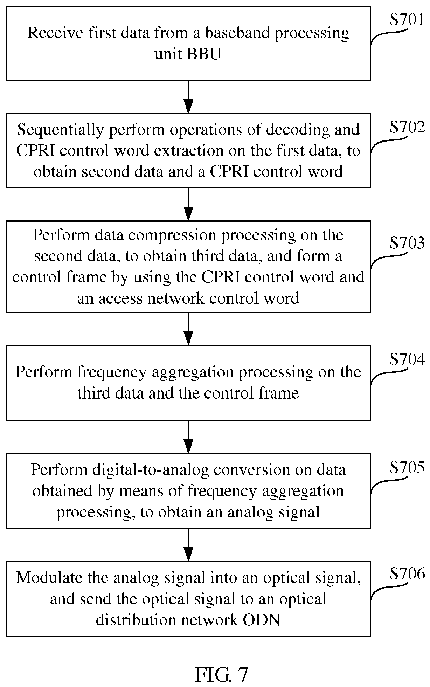

FIG. 7 is a flowchart of an embodiment of a wireless fronthaul passive optical network PON method according to the present application. As shown in FIG. 7, the method includes the following steps.
S701. Receive first data from a baseband unit BBU.
S702. Sequentially perform operations of decoding and CPRI control word extraction on the first data, to obtain second data and a CPRI control word.
S703. Perform data compression processing on the second data, to obtain third data, and form a control frame by using the CPRI control word and an access network control word.
S704. Perform frequency aggregation processing on the third data and the control frame.
S705. Perform digital-to-analog conversion on data obtained by means of frequency aggregation processing, to obtain an analog signal.
S706. Modulate the analog signal into an optical signal, and send the optical signal to an optical distribution network ODN.

Optionally, the sequentially performing operations of decoding and CPRI control word extraction on the first data, to obtain second data and a CPRI control word may specifically include: decoding the first data; performing serial-to-parallel conversion on the decoded first data, to obtain two pieces of mutually orthogonal data; and separately performing CPRI control word extraction on the two pieces of mutually orthogonal data, to obtain the CPRI control word and the second data that includes the two pieces of orthogonal data.

Optionally, after the forming a control frame by using the CPRI control word and an access network control word, the method may further include: performing FEC encoding on the control frame.

Optionally, after the performing FEC encoding on the control frame, the method may further include: performing higher-order modulation on a control frame obtained by means of FEC encoding; and adding a training sequence to a control frame obtained by means of higher-order modulation, and performing frequency aggregation processing.

Optionally, the performing data compression processing on the second data, to obtain third data may specifically include: performing constellation reconstruction on the second data, to obtain the third data.

Optionally, the performing frequency aggregation processing on the third data and the control frame may specifically include: separately performing FFT transformation on the third data and the control frame; performing IFFT transformation on third data and a control frame that are obtained by means of FFT transformation; and performing parallel-to-serial conversion on third data and a control frame that are obtained by means of IFFT transformation, and sending converted-to data to the ODN.

The wireless fronthaul passive optical network PON method provided in this embodiment is corresponding to OLT devices in the embodiments shown in FIG. 1 to FIG. 3. For specific execution processes and beneficial effects thereof, reference may be made to related descriptions in the embodiments of FIG. 1 to FIG. 3, and details are not described herein again.

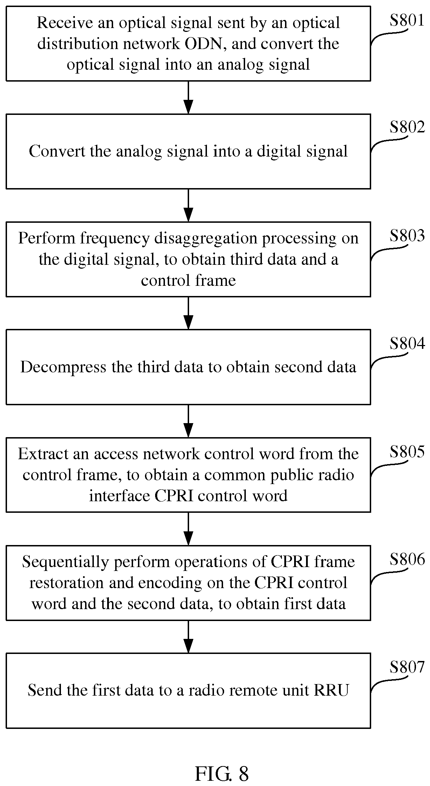

FIG. 8 is a flowchart of another embodiment of a wireless fronthaul passive optical network PON method according to the present application. As shown in FIG. 8, the method includes the following steps.
S801. Receive an optical signal sent by an optical distribution network ODN, and convert the optical signal into an analog signal.
S802. Convert the analog signal into a digital signal.
S803. Perform frequency disaggregation processing on the digital signal, to obtain third data and a control frame.
S804. Decompress the third data to obtain second data.
S805. Extract an access network control word from the control frame, to obtain a common public radio interface CPRI control word.
S806. Sequentially perform operations of CPRI frame restoration and encoding on the CPRI control word and the second data, to obtain first data.
S807. Send the first data to a radio remote unit RRU.

Optionally, after the performing frequency disaggregation processing on the digital signal, to obtain third data and a control frame, the method may further include: performing channel compensation processing and forward error correction FEC encoding processing on the control frame, to obtain bit error rate BER information of a channel.

Optionally, the performing an encoding operation on the CPRI control word and the second data may specifically include: scrambling code according to a value relationship between a BER and a threshold.

Optionally, the scrambling code according to a value relationship between a BER and a threshold may specifically include:
if a sum of values of original code bits is greater than a set threshold n, adding 1 behind the n^{th} bit and adding 1 behind the last bit; or if a sum of values of original code bits is less than a set threshold n, adding 0 behind the n^{th} bit and adding 0 behind the last bit, where n is a positive integer greater than 1.

Optionally, the sequentially performing operations of CPRI frame restoration and encoding on the CPRI control word and the second data, to obtain first data may specifically include: performing CPRI frame restoration on the CPRI control word and the second data; and encoding data obtained by means of CPRI frame restoration to obtain the first data, and sending the first data to the RRU.

Optionally, the performing frequency disaggregation processing on the digital signal, to obtain third data and a control frame may specifically include: performing serial-to-parallel conversion on the digital signal; performing FFT transformation on a digital signal obtained by means of serial-to-parallel conversion; and performing IFFT transformation on a digital signal obtained by means of FFT transformation, to obtain the third data and the control frame.

The wireless fronthaul passive optical network PON method provided in this embodiment is corresponding to ONU devices in the embodiments shown in FIG. 4 to FIG. 6. For specific execution processes and beneficial effects thereof, reference may be made to related descriptions in the embodiments of FIG. 4 to FIG. 6, and details are not described herein again.

It may be clearly understood by a person skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or some of the functions described above. For a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods described in the embodiments of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present application, but not for limiting the present application. Although the present application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present application.

## Claims

1. An optical line terminal, comprising:
a common public radio interface ,CPRI, interface, configured to receive first data from a baseband unit ,BBU;
a wireless compatibility module (21), configured to sequentially perform operations of decoding and CPRI control word extraction on the first data, to obtain second data and a CPRI control word;
a data compression module (22), configured to perform data compression processing on the second data, to obtain third data;
a framing module (23), configured to form a control frame by using the CPRI control word and an access network control word;
a frequency aggregation module (24);
a digital-to-analog conversion module (25), configured to perform digital-to-analog conversion on data obtained from the frequency aggregation module (24), to obtain an analog signal; and
an optical transmitter (26), configured to modulate the analog signal into an optical signal, and send the optical signal to an optical distribution network ,ODN;
wherein the frequency aggregation module (24) comprises:
a fast Fourier transformation FFT unit (241), configured to separately perform FFT transformation on the third data and the control frame;
an inverse fast Fourier transformation IFFT unit (242), configured to perform IFFT transformation on third data and a control frame that are obtained by means of FFT transformation; and
a parallel-to-serial conversion unit (243), configured to perform parallel-to-serial conversion on third data and a control frame that are obtained by means of IFFT transformation.

2. The optical line terminal according to claim 1, wherein the wireless compatibility module (21) specifically comprises:
a decoding unit (211), configured to decode the first data;
a serial-to-parallel conversion unit (212), configured to perform serial-to-parallel conversion on the decoded first data, to obtain two pieces of mutually orthogonal data; and
a CPRI deframing unit (213), configured to separately perform CPRI control word extraction on the two pieces of mutually orthogonal data, to obtain the CPRI control word and the second data that comprises the two pieces of orthogonal data.

3. The optical line terminal according to claim 1 or 2, further comprising:
a forward error correction ,FEC, module (27), configured to perform FEC encoding on the control frame.

4. The optical line terminal according to claim 3, further comprising:
a higher-order modulation module (28), configured to perform higher-order modulation on a control frame obtained by means of FEC encoding; and
a TS processing module (29), configured to add a training sequence to a control frame obtained by means of higher-order modulation, and input the control frame to the aggregation module.

5. An optical network unit, comprising:
an optical receiver (41), configured to receive an optical signal sent by an optical distribution network ,ODN, and convert the optical signal into an analog signal;
an analog-to-digital conversion module (42), configured to convert the analog signal into a digital signal;
a frequency disaggregation module (43), wherein the frequency disaggregation module (43) comprises:
a serial-to-parallel conversion unit (431), configured to perform serial-to-parallel conversion on the digital signal;
a fast Fourier transformation FFT unit (432), configured to perform FFT transformation on a digital signal obtained by means of serial-to-parallel conversion; and
an inverse fast Fourier transformation IFFT unit (433), configured to perform IFFT transformation on a digital signal obtained by means of FFT transformation, to obtain the third data and the control frame;
a bit reassembly module (44), configured to decompress the third data to obtain second data;
a deframing module (45), configured to extract an access network control word from the control frame, to obtain a common public radio interface ,CPRI, control word;
a wireless compatibility module (46), configured to sequentially perform operations of CPRI frame restoration and encoding on the CPRI control word and the second data, to obtain first data; and
a CPRI interface (47), configured to send the first data to a radio remote unit RRU.

6. The optical network unit according to claim 5, further comprising:
a channel compensation module (47), configured to perform channel compensation processing and forward error correction ,FEC, encoding processing on the control frame, to obtain bit error rate ,BER, information of a channel.

7. The optical network unit according to claim 6, wherein the wireless compatibility module is specifically configured to scramble code according to a value relationship between a BER and a threshold; and wherein the scrambling code according to a value relationship between a BER and a threshold specifically comprises: if a sum of values of original code bits is greater than a set threshold n, add 1 behind the n^{th} bit and add 1 behind the last bit; or if a sum of values of original code bits is less than a set threshold n, add 0 behind the n^{th} bit and add 0 behind the last bit, wherein n is a positive integer greater than 1.

8. A wireless fronthaul passive optical network ,PON, system, comprising a baseband unit ,BBU, the optical line terminal ,OLT, according to any one of claims 1 to 4, an optical distribution network ,ODN, the optical network unit ,ONU, according to any one of claims 5 to 7, and a radio remote unit ,RRU, wherein
the BBU communicates with the OLT through a common public radio interface ,CPRI, on the BBU, and the RRU communicates with the ONU through a CPRI interface on the RRU.

9. A wireless fronthaul passive optical network ,PON, method, comprising:
receiving first data (S701) from a baseband unit ,BBU;
sequentially performing operations of decoding and CPRI control word extraction (S702) on the first data, to obtain second data and a CPRI control word;
performing data compression processing on the second data, to obtain third data, and forming a control frame (S703) by using the CPRI control word and an access network control word;
performing frequency aggregation processing on the third data and the control frame (S704);
performing digital-to-analog conversion (S705) on data obtained by means of frequency aggregation processing, to obtain an analog signal; and
modulating the analog signal into (S706) an optical signal, and sending the optical signal to an optical distribution network ,ODN;
wherein the performing frequency aggregation processing on the third data and the control frame (S704) specifically comprises:
separately performing FFT transformation on the third data and the control frame;
performing IFFT transformation on third data and a control frame that are obtained by means of FFT transformation; and
performing parallel-to-serial conversion on third data and a control frame that are obtained by means of IFFT transformation.

10. The method according to claim 9, wherein the sequentially performing operations of decoding and CPRI control word extraction (S702) on the first data, to obtain second data and a CPRI control word specifically comprises:
decoding the first data;
performing serial-to-parallel conversion on the decoded first data, to obtain two pieces of mutually orthogonal data; and
separately performing CPRI control word extraction on the two pieces of mutually orthogonal data, to obtain the CPRI control word and the second data that comprises the two pieces of orthogonal data.

11. The method according to claim 9 or 10, after the forming a control frame by using the CPRI control word and an access network control word, further comprising:
performing FEC encoding on the control frame.

12. A wireless fronthaul passive optical network ,PON, method, comprising:
receiving an optical signal (S801) sent by an optical distribution network ,ODN, and converting the optical signal into an analog signal;
converting the analog signal (S802) into a digital signal;
performing frequency disaggregation processing (S803) on the digital signal, to obtain third data and a control frame;
decompressing the third data (S804) to obtain second data;
extracting an access network control (S805) word from the control frame, to obtain a common public radio interface ,CPRI, control word;
sequentially performing operations of CPRI frame restoration and encoding (S806) on the CPRI control word and the second data, to obtain first data; and
sending the first data (S807) to a radio remote unit ,RRU;
wherein the performing frequency disaggregation processing (S803) on the digital signal, to obtain third data and a control frame specifically comprises:
performing serial-to-parallel conversion on the digital signal;
performing FFT transformation on a digital signal obtained by means of serial-to-parallel conversion; and
performing IFFT transformation on a digital signal obtained by means of FFT transformation, to obtain the third data and the control frame.

13. The method according to claim 12, after the performing frequency disaggregation processing (S803) on the digital signal, to obtain third data and a control frame, further comprising:
performing channel compensation processing and forward error correction ,FEC, encoding processing on the control frame, to obtain bit error rate ,BER, information of a channel.

14. The method according to claim 13, wherein the performing an encoding operation on the CPRI control word and the second data specifically comprises:
scrambling code according to a value relationship between a BER and a threshold; and
wherein the scrambling code according to a value relationship between a BER and a threshold specifically comprises:
if a sum of values of original code bits is greater than a set threshold n, adding 1 behind the n^{th} bit and adding 1 behind the last bit; or if a sum of values of original code bits is less than a set threshold n, adding 0 behind the n^{th} bit and adding 0 behind the last bit, wherein n is a positive integer greater than 1.

## Patentansprüche

1. Optischer Leitungsanschluss, umfassend:
eine "Common Public Radio Interface"-Schnittstelle bzw. CPRI-Schnittstelle, ausgelegt zum Empfangen erster Daten von einer Basisbandeinheit, BBU;
ein Drahtlose-Kompatibilität-Modul (21), ausgelegt zum sequentiellen Durchführen von Operationen von Decodieren und CPRI-Steuerwortextraktion an den ersten Daten, um zweite Daten und ein CPRI-Steuerwort zu erhalten;
ein Datenkompressionsmodul (22), ausgelegt zum Durchführen von Datenkompressionsverarbeitung an den zweiten Daten, um dritte Daten zu erhalten;
ein Rahmungsmodul (23), ausgelegt zum Ausbilden eines Steuerrahmens durch Verwendung des CPRI-Steuerworts und eines Netzzugangssteuerworts;
ein Frequenzaggregationsmodul (24);
ein Digital-Analog-Umwandlungsmodul (25), ausgelegt zum Durchführen von Digital-Analog-Umwandlung an von dem Frequenzaggregationsmodul (24) erhaltenen Daten, um ein Analogsignal zu erhalten; und
einen optischen Sender (26), ausgelegt zum Modulieren des Analogsignals in ein optisches Signal und zum Senden des optischen Signals an ein optisches Verteilnetz, ODN;
wobei das Frequenzaggregationsmodul (24) Folgendes umfasst:
eine Schnelle-Fourier-Transformation-Einheit bzw. FFT-Einheit (241), ausgelegt zum separaten Durchführen einer FFT-Transformation an den dritten Daten und dem Steuerrahmen;
eine Inverse-Schnelle-Fourier-Transformation-Einheit bzw. IFFT-Einheit (242), ausgelegt zum Durchführen einer IFFT-Transformation an dritten Daten und einem Steuerrahmen, die mittels FFT-Transformation erhalten wurden; und
eine Parallel-Seriell-Umwandlungseinheit (243), ausgelegt zum Durchführen von Parallel-Seriell-Umwandlung an dritten Daten und einem Steuerrahmen, die mittels IFFT-Transformation erhalten wurden.

2. Optischer Leitungsanschluss nach Anspruch 1, wobei das Drahtlose-Kompatibilität-Modul (21) insbesondere Folgendes umfasst:
eine Decodiereinheit (211), ausgelegt zum Decodieren der ersten Daten;
eine Seriell-Parallel-Umwandlungseinheit (212), ausgelegt zum Durchführen von Seriell-Parallel-Umwandlung an den decodierten ersten Daten, um zwei Stücke von gegenseitig orthogonalen Daten zu erhalten; und
ein CPRI-Entrahmungsmodul (213), ausgelegt zum separaten Durchführen von CPRI-Steuerwortextraktion an den zwei Stücken von gegenseitig orthogonalen Daten, um das CPRI-Steuerwort und die zweiten Daten, die die zwei Stücke von orthogonalen Daten enthalten, zu erhalten.

3. Optischer Leitungsanschluss nach Anspruch 1 oder 2, ferner umfassend:
ein Vorwärtsfehlerkorrektur-Modul bzw. FEC-Modul (27), ausgelegt zum Durchführen von FEC-Codierung an dem Steuerrahmen.

4. Optischer Leitungsanschluss nach Anspruch 3, ferner umfassend:
ein Modulation-höherer-Ordnung-Modul (28), ausgelegt zum Durchführen von Modulation höherer Ordnung an einem mittels FEC-Codierung erhaltenen Steuerrahmen; und
ein TS-Verarbeitungsmodul (29), ausgelegt zum Hinzufügen einer Trainingssequenz zu einem mittels der Modulation höherer Ordnung erhaltenen Steuerrahmen und zum Eingeben des Steuerrahmens in das Aggregationsmodul.

5. Optische Netzeinheit, umfassend:
einen optischen Empfänger (41), ausgelegt zum Empfangen eines durch ein optisches Verteilnetz, ODN, gesendeten optischen Signals und zum Umwandeln des optischen Signals in ein Analogsignal;
ein Analog-Digital-Umwandlungsmodul (42), ausgelegt zum Umwandeln des Analogsignals in ein Digitalsignal;
ein Frequenzdeaggregationsmodul (43), wobei das Frequenzdeaggregationsmodul (43) Folgendes umfasst:
eine Seriell-Parallel-Umwandlungseinheit (431), ausgelegt zum Durchführen von Seriell-Parallel-Umwandlung an dem Digitalsignal;
eine Schnelle-Fourier-Transformation-Einheit bzw. FFT-Einheit (432), ausgelegt zum Durchführen von FFT-Transformation an einem mittels Seriell-Parallel-Umwandlung erhaltenen Digitalsignal; und
eine Inverse-Schnelle-Fourier-Transformation-Einheit bzw. IFFT-Einheit (433), ausgelegt zum Durchführen von IFFT-Transformation an einem mittels FFT-Transformation erhaltenen Digitalsignal, um die dritten Daten und den Steuerrahmen zu erhalten;
ein Bit-Wiederzusammensetzung-Modul (44), ausgelegt zum Dekomprimieren der dritten Daten, um zweite Daten zu erhalten;
ein Entrahmungsmodul (45), ausgelegt zum Extrahieren eines Netzzugang-Steuerworts aus dem Steuerrahmen, um ein "Common Public Radio Interface"-Steuerwort bzw. CPRI-Steuerwort zu erhalten;
ein Drahtlose-Kompatibilität-Modul (46), ausgelegt zum sequentiellen Durchführen von Operationen von CPRI-Rahmenwiederherstellung und Codieren an dem CPRI-Steuerwort und den zweiten Daten, um erste Daten zu erhalten; und
eine CPRI-Schnittstelle (47), ausgelegt zum Senden der ersten Daten an eine Funkferneinheit, RRU.

6. Optische Netzeinheit nach Anspruch 5, ferner umfassend:
ein Kanalkompensationsmodul (47), ausgelegt zum Durchführen von Kanalkompensationsverarbeitung und Vorwärtsfehlerkorrektur-Codierverarbeitung bzw. FEC-Codierverarbeitung an dem Steuerrahmen, um Bitfehlerrate-Informationen bzw. BER-Informationen eines Kanals zu erhalten.

7. Optische Netzeinheit nach Anspruch 6, wobei das Drahtlose-Kompatibilität-Modul insbesondere ausgelegt ist zum Verwürfeln von Code gemäß einer Wertbeziehung zwischen einem BER und einer Schwelle; und wobei das Codeverwürfeln gemäß einer Wertbeziehung zwischen einem BER und einer Schwelle insbesondere Folgendes umfasst: falls eine Summe von Werten von Ursprungscodebits größer als eine eingestellte Schwelle n ist, Hinzufügen von 1 hinter dem n-ten Bit und Hinzufügen von 1 hinter dem letzten Bit; oder falls eine Summe von Werten von Ursprungscodebits kleiner als eine eingestellte Schwelle n ist, Hinzufügen von 0 hinter dem n-ten Bit und Hinzufügen von 0 hinter dem letzten Bit, wobei n eine positive ganze Zahl größer als 1 ist.

8. Drahtloses "Fronthaul"-Passives-Optisches-Netz-System bzw. drahtloses "Fronthaul"-PON-System, umfassend eine Basisbandeinheit, BBU, den optischen Leitungsanschluss, OLT, nach einem der Ansprüche 1 bis 4, ein optisches Verteilnetz, ODN, die optische Netzeinheit, ONU, nach einem der Ansprüche 5-7 und eine Funkferneinheit, RRU, wobei
die BBU mit dem OLT über eine "Common Public Radio Interface"-Schnittstelle bzw. CPRI-Schnittstelle an der BBU kommuniziert und die RRU mit der ONU durch eine CPRI-Schnittstelle an der RRU kommuniziert.

9. Drahtloses "Fronthaul"-Passives-Optisches-Netz-Verfahren bzw. drahtloses "Fronthaul"-PON-Verfahren, umfassend:
Empfangen erster Daten (S701) von einer Basisbandeinheit, BBU;
sequentielles Durchführen von Operationen von Decodieren und CPRI-Steuerwortextraktion (S702) an den ersten Daten, um zweite Daten und ein CPRI-Steuerwort zu erhalten;
Durchführen von Datenkompressionsverarbeitung an den zweiten Daten, um dritte Daten zu erhalten, und Ausbilden eines Steuerrahmens (S703) durch Verwendung des CPRI-Steuerworts und eines Netzzugangssteuerworts;
Durchführen von Frequenzaggregationsverarbeitung an den dritten Daten und dem Steuerrahmen (S704);
Durchführen von Digital-Analog-Umwandlung (S705) an mittels Frequenzaggregationsverarbeitung erhaltenen Daten, um ein Analogsignal zu erhalten; und
Modulieren des Analogsignals (S706) in ein optisches Signal und Senden des optischen Signals an ein optisches Verteilnetz, ODN;
wobei das Durchführen von Frequenzaggregationsverarbeitung an den dritten Daten und dem Steuerrahmen (S704) insbesondere Folgendes umfasst:
separates Durchführen einer FFT-Transformation an den dritten Daten und dem Steuerrahmen;
Durchführen einer IFFT-Transformation an dritten Daten und einem Steuerrahmen, die mittels FFT-Transformation erhalten wurden; und
Durchführen von Parallel-Seriell-Umwandlung an dritten Daten und einem Steuerrahmen, die mittels IFFT-Transformation erhalten wurden.

10. Verfahren nach Anspruch 9, wobei das sequentielle Durchführen von Operationen von Decodieren und CPRI-Steuerwortextraktion (S702) an den ersten Daten, um zweite Daten und ein CPRI-Steuerwort zu erhalten, insbesondere Folgendes umfasst:
Decodieren der ersten Daten;
Durchführen von Seriell-Parallel-Umwandlung an den decodierten ersten Daten, um zwei Stücke von gegenseitig orthogonalen Daten zu erhalten; und
separates Durchführen von CPRI-Steuerwortextraktion an den zwei Stücken von gegenseitig orthogonalen Daten, um das CPRI-Steuerwort und die zweiten Daten, die die zwei Stücke von orthogonalen Daten enthalten, zu erhalten.

11. Verfahren nach Anspruch 9 oder 10, nach dem Ausbilden eines Steuerrahmens durch Verwendung des CPRI-Steuerworts und eines Netzzugangssteuerworts, ferner umfassend:
Durchführen von FEC-Codierung an dem Steuerrahmen.

12. Drahtloses "Fronthaul"-Passives-Optisches-Netz-Verfahren bzw. drahtloses "Fronthaul"-PON-Verfahren, umfassend:
Empfangen eines durch ein optisches Verteilnetz, ODN, gesendeten optischen Signals (S801) und Umwandeln des optischen Signals in ein Analogsignal;
Umwandeln des Analogsignals (S802) in ein Digitalsignal;
Durchführen von Frequenzdeaggregationsverarbeitung (S803) an dem Digitalsignal, um dritte Daten und den Steuerrahmen zu erhalten;
Dekomprimieren der dritten Daten (S804), um zweite Daten zu erhalten;
Extrahieren eines Netzzugang-Steuerworts (S805) aus dem Steuerrahmen, um ein "Common Public Radio Interface"-Steuerwort bzw. CPRI-Steuerwort zu erhalten;
sequentielles Durchführen von Operationen von CPRI-Rahmenwiederherstellung und Codieren (S806) an dem CPRI-Steuerwort und den zweiten Daten, um erste Daten zu erhalten; und
Senden der ersten Daten (S807) an eine Funkferneinheit, RRU;
wobei das Durchführen von Frequenzdeaggregationsverarbeitung (S803) an dem Digitalsignal, um dritte Daten und den Steuerrahmen zu erhalten, insbesondere Folgendes umfasst:
Durchführen von Seriell-Parallel-Umwandlung an dem Digitalsignal;
Durchführen von FFT-Transformation an einem mittels Seriell-Parallel-Umwandlung erhaltenen Digitalsignal; und
Durchführen von IFFT-Transformation an einem mittels FFT-Transformation erhaltenen Digitalsignal, um die dritten Daten und den Steuerrahmen zu erhalten.

13. Verfahren nach Anspruch 12, nach dem Durchführen von Frequenzdeaggregationsverarbeitung (S803) an dem Digitalsignal, um dritte Daten und einen Steuerrahmen zu erhalten, ferner umfassend:
Durchführen von Kanalkompensationsverarbeitung und Vorwärtsfehlerkorrektur-Codierverarbeitung bzw. FEC-Codierverarbeitung an dem Steuerrahmen, um Bitfehlerrate-Informationen bzw. BER-Informätionen eines Kanals zu erhalten.

14. Verfahren nach Anspruch 13, wobei das Durchführen einer Codieroperation an dem CPRI-Steuerwort und den zweiten Daten insbesondere Folgendes umfasst:
Verwürfeln von Code gemäß einer Wertbeziehung zwischen einem BER und einer Schwelle; und
wobei das Codeverwürfeln gemäß einer Wertbeziehung zwischen einem BER und einer Schwelle insbesondere Folgendes umfasst:
falls eine Summe von Werten von Ursprungscodebits größer als eine eingestellte Schwelle n ist, Hinzufügen von 1 hinter dem n-ten Bit und Hinzufügen von 1 hinter dem letzten Bit; oder falls eine Summe von Werten von Ursprungscodebits kleiner als eine eingestellte Schwelle n ist, Hinzufügen von 0 hinter dem n-ten Bit und Hinzufügen von 0 hinter dem letzten Bit, wobei n eine positive ganze Zahl größer als 1 ist.

## Revendications

1. Terminal de ligne optique comprenant :
une interface d'interface radio publique commune (CPRI) configurée pour recevoir des premières données en provenance d'une unité de bande de base (BBU) ;
un module de compatibilité sans fil (21), configuré pour effectuer de manière séquentielle des opérations de décodage et d'extraction de mot de commande d'interface CRPI sur les premières données pour obtenir des deuxièmes données et un mot de commande d'interface CPRI ;
un module de compression de données (22), configuré pour effectuer un traitement de compression de données sur les deuxièmes données pour obtenir des troisièmes données ;
un module de tramage (23), configuré pour former une trame de commande en utilisant le mot de commande d'interface CPRI et un mot de commande de réseau d'accès ;
un module d'agrégation de fréquence (24) ;
un module de conversion numérique-analogique (25), configuré pour effectuer une conversion numérique-analogique sur des données obtenues du module d'agrégation de fréquence (24) pour obtenir un signal analogique ; et
un émetteur optique (26), configuré pour moduler le signal analogique en un signal optique et pour envoyer le signal optique à un réseau de distribution optique (ODN) ;
dans lequel le module d'agrégation de fréquence (24) comprend :
une unité de transformation de Fourier rapide (FFT) (241), configurée pour effectuer de manière séparée une transformation FFT sur des troisièmes données et la trame de commande ;
une unité de transformation de Fourier rapide inverse (IFFT) (242), configurée pour effectuer une transformation IFFT sur des troisièmes données et une trame de commande qui sont obtenues au moyen d'une transformation FFT ; et
une unité de conversion parallèle-série (243), configurée pour effectuer une conversion parallèle-série sur des troisièmes données et une trame de commande qui sont obtenues au moyen d'une transformation IFFT.

2. Terminal de ligne optique selon la revendication 1, dans lequel le module de compatibilité sans fil (21) comprend spécialement :
une unité de décodage (211), configurée pour décoder les premières données ;
une unité de conversion série-parallèle (212), configurée pour effectuer une conversion série-parallèle sur les premières données décodées pour obtenir deux éléments de données mutuellement orthogonales ; et
une unité de détramage d'interface CPRI (213), configurée pour effectuer de manière séparée une extraction de mot de commande d'interface CPRI sur les deux éléments de données mutuellement orthogonales pour obtenir le mot de commande d'interface CPRI et les deuxièmes données qui comprennent les deux éléments de données orthogonales.

3. Terminal de ligne optique selon la revendication 1 ou 2, comprenant en outre :
un module de correction d'erreur sans voie de retour (FEC) (27), configuré pour effectuer un codage de correction FEC sur la trame de commande.

4. Terminal de ligne optique selon la revendication 3, comprenant en outre :
un module de modulation d'ordre supérieur (28), configuré pour effectuer une modulation d'ordre supérieur sur une trame de commande obtenue au moyen d'un codage de correction FEC ; et
un module de traitement TS (29), configuré pour ajouter une séquence d'apprentissage à une trame de commande obtenue au moyen d'une modulation d'ordre supérieur et pour entrer la trame de commande dans le module d'agrégation.

5. Unité de réseau optique comprenant :
un récepteur optique (41), configuré pour recevoir un signal optique envoyé par un réseau de distribution optique (ODN) et pour convertir le signal optique en signal analogique ;
un module de conversion analogique-numérique (42), configuré pour convertir le signal analogique en signal numérique ;
un module de désagrégation de fréquence (43), dans lequel le module de désagrégation de fréquence (43) comprend :
une unité de conversion série-parallèle (431), configurée pour effectuer une conversion série-parallèle sur le signal numérique ;
une unité de transformation de Fourier rapide (FFT) (432), configurée pour effectuer une transformation FFT sur un signal numérique obtenu au moyen d'une conversion série-parallèle ; et
une unité de transformation de Fourier rapide inverse (IFFT) (433), configurée pour effectuer une transformation IFFT sur un signal numérique obtenu au moyen d'une transformation FFT pour obtenir les troisièmes données et la trame de commande ;
un module de réassemblage de bit (44), configuré pour décompresser les troisièmes données pour obtenir des deuxièmes données ;
un module de détramage (45), configuré pour extraire un mot de commande de réseau d'accès à partir de la trame de commande pour obtenir un mot de commande d'interface radio publique commune (CPRI) ;
un module de compatibilité sans fil (46), configuré pour effectuer de manière séquentielle des opérations de restauration de trame d'interface CPRI et de codage sur le mot de commande d'interface CRPI et les deuxièmes données pour obtenir des premières données ; et
une interface d'interface CPRI (47), configurée pour envoyer les premières données à une unité radioélectrique distante (RRU).

6. Unité de réseau optique selon la revendication 5, comprenant en outre :
un module de compensation de canal (47), configuré pour effectuer un traitement de compensation de canal et un traitement de codage de correction d'erreur sans voie de retour (FEC) sur la trame de commande pour obtenir des informations de taux d'erreurs sur les bits (BER) d'un canal.

7. Unité de réseau optique selon la revendication 6, dans lequel le module de compatibilité sans fil est spécialement configuré pour brouiller un code en fonction d'une relation de valeur entre un taux BER et un seuil ; et dans lequel le brouillage d'un code en fonction d'une relation de valeur entre un taux BER et un seuil consiste spécialement : si une somme de valeurs de bits de code d'origine est supérieure à un seuil défini (n), à ajouter 1 après le n^{ième} bit et à ajouter 1 après le dernier bit ; ou si une somme de valeurs de bits de code d'origine est inférieure à un seuil défini (n), à ajouter 0 après le n^{ième} bit et à ajouter 0 après le dernier bit, dans lequel n est un nombre entier positif supérieur à 1.

8. Système de réseau optique passif (PON) de fronthaul sans fil, comprenant une unité de bande de base (BBU), le terminal de ligne optique (OLT) selon l'une quelconque des revendications 1 à 4, un réseau de distribution optique (ODN), l'unité de réseau optique (ONU) selon l'une quelconque des revendications 5 à 7 et une unité radioélectrique distante (RRU), dans lequel
l'unité BBU communique avec le terminal OLT au moyen d'une interface d'interface radio publique commune (CPRI) sur l'unité BBU et l'unité RRU communique avec l'unité ONU au moyen d'une interface d'interface CPRI sur l'unité RRU.

9. Procédé de réseau optique passif (PON) de fronthaul sans fil, consistant :
à recevoir des premières données (S701) en provenance d'une unité de bande de base (BBU) ;
à effectuer de manière séquentielle des opérations de décodage et d'extraction de mot de commande d'interface CPRI (S702) sur les premières données pour obtenir des deuxièmes données et un mot de commande d'interface CPRI ;
à effectuer un traitement de compression de données sur les deuxièmes données pour obtenir des troisièmes données et à former une trame de commande (S703) en utilisant le mot de commande d'interface CPRI et un mot de commande de réseau d'accès ;
à effectuer un traitement d'agrégation de fréquence sur les troisièmes données et la trame de commande (S704) ;
à effectuer une conversion numérique-analogique (S705) sur des données obtenues au moyen d'un traitement d'agrégation de fréquence pour obtenir un signal analogique ; et
à moduler le signal analogique (S706) en un signal optique et à envoyer le signal optique à un réseau de distribution optique (ODN) ;
dans lequel la réalisation du traitement d'agrégation de fréquence sur les troisièmes données et la trame de commande (S704) consiste spécialement :
à effectuer de manière séparée une transformation FFT sur les troisièmes données et la trame de commande ;
à effectuer une transformation IFFT sur des troisièmes données et une trame de commande qui sont obtenues au moyen d'une transformation FFT ; et
à effectuer une conversion parallèle-série sur des troisièmes données et une trame de commande qui sont obtenues au moyen d'une transformation IFFT.

10. Procédé selon la revendication 9, dans lequel la réalisation séquentielle d'opérations de décodage et d'extraction de mot de commande d'interface CPRI (S702) sur les premières données pour obtenir des deuxièmes données et un mot de commande d'interface CPRI consiste spécialement :
à décoder les premières données :
à effectuer une conversion série-parallèle sur les premières données décodées pour obtenir deux éléments de données mutuellement orthogonales ; et
à effectuer de manière séparée une extraction de mot de commande d'interface CPRI sur les deux éléments de données mutuellement orthogonales pour obtenir le mot de commande d'interface CPRI et les deuxièmes données qui comprennent les deux éléments de données orthogonales.

11. Procédé selon la revendication 9 ou 10, après la formation d'une trame de commande en utilisant le mot de commande d'interface CPRI et un mot de commande de réseau d'accès, consistant en outre :
à effectuer un codage de correction FEC sur la trame de commande.

12. Procédé de réseau optique passif (PON) de fronthaul sans fil consistant :
à recevoir un signal optique (S801) envoyé par un réseau de distribution optique (ODN) et à convertir le signal optique en signal analogique ;
à convertir le signal analogique (S802) en signal numérique ;
à effectuer un traitement de désagrégation de fréquence (S803) sur le signal numérique pour obtenir des troisièmes données et une trame de commande :
à décompresser les troisièmes données (S804) pour obtenir des deuxièmes données ;
pour extraire un mot de commande de réseau d'accès (S805) de la trame de commande pour obtenir un mot de commande d'interface radio publique commune (CPRI) ;
à effectuer de manière séquentielle des opérations de restauration de trame d'interface CPRI et de codage (S806) sur le mot de commande d'interface CPRI et les deuxièmes données pour obtenir des premières données ; et
à envoyer les premières données (S807) à une unité radioélectrique distante (RRU) ;
dans lequel la réalisation d'un traitement de désagrégation de fréquence (S803) sur le signal numérique pour obtenir des troisièmes données et une trame de commande consiste spécialement :
à effectuer une conversion série-parallèle sur le signal numérique ;
à effectuer une transformation FFT sur un signal numérique obtenu au moyen d'une conversion série-parallèle ; et
à effectuer une transformation IFFT sur un signal numérique obtenu au moyen d'une transformation FFT pour obtenir les troisièmes données et la trame de commande.

13. Procédé selon la revendication 12, après la réalisation du traitement de désagrégation de fréquence (S803) sur le signal numérique pour obtenir des troisièmes données et une trame de commande, consistant en outre :
à effectuer un traitement de compensation de canal et un traitement de codage de correction d'erreur sans voie de retour (FEC) sur la trame de commande pour obtenir des informations de taux d'erreurs sur les bits (BER) d'un canal.

14. Procédé selon la revendication 13, dans lequel la réalisation d'une opération de codage sur le mot de commande d'interface CPRI et les deuxièmes données consiste spécialement :
à brouiller un code en fonction d'une relation de valeur entre un taux BER et un seuil ; et
dans lequel le brouillage d'un code en fonction d'une relation de valeur entre un taux BER et un seuil consiste spécialement :
si une somme de valeurs de bits de code d'origine est supérieure à un seuil défini (n), à ajouter 1 après le n^{ième} bit et à ajouter 1 après le dernier bit ; ou si une somme de valeurs de bits de code d'origine est inférieure à un seuil défini (n), à ajouter 0 après le n^{ième} bit et à ajouter 0 après le dernier bit, dans lequel n est un nombre entier positif supérieur à 1.
